# EUROPÄISCHE PATENTSCHRIFT

(11) **EP 1 105 258 B1**
(45) Veröffentlichungstag und Bekanntmachung des Hinweises auf die Patenterteilung: **31.03.2004**
(21) Anmeldenummer: 99944426.8
(22) Anmeldetag: 18.08.1999
(51) Int. Cl.: B25J 19/00

(54) **VORRICHTUNG UND VERFAHREN ZUM GEWICHTSAUSGLEICH EINES ROBOTERARMS**
DEVICE AND METHOD FOR BALANCING THE WEIGHT ON A ROBOT ARM
DISPOSITIF ET PROCEDE D'EQUILIBRAGE DE POIDS POUR BRAS DE ROBOT

(30) Priorität: 19.08.1998 DE 19837595
(43) Veröffentlichungstag der Anmeldung: 13.06.2001
(73) Patentinhaber: KUKA Roboter GmbH, 86165 Augsburg (DE)
(72) Erfinder: ORTMEIER, Helmut, D-97990 Weikersheim (DE); ENGELHARDT, Dietrich, D-86316 Friedberg (DE)
(74) Vertreter: Lempert, Jost, Dipl.-Phys. Dr. rer.nat.
(86) Internationale Anmeldenummer: PCT/EP1999/006040
(87) Internationale Veröffentlichungsnummer: WO 2000/010777

(56) Entgegenhaltungen:
- GB-A- 2 109 337
- US-A- 4 229 136
- PATENT ABSTRACTS OF JAPAN vol. 018, no. 666 (M-1724), 15. Dezember 1994 (1994-12-15) -& JP 06 262561 A (TOKICO LTD), 20. September 1994 (1994-09-20)
- PATENT ABSTRACTS OF JAPAN vol. 1998, no. 01, 30. Januar 1998 (1998-01-30) -& JP 09 229009 A (DENSO CORP), 2. September 1997 (1997-09-02)

## Beschreibung

Die Erfindung betrifft eine Vorrichtung und ein Verfahren zum Gewichtsausgleich eines Roboterarms eines Roboters.

Zur Kompensation statischer Lasten weist ein Roboter in der Regel eine Vorrichtung zum Gewichtsausgleich auf, die beispielsweise als bewegliches Gegengewicht zum Roboterarm ausgebildet sein kann. Zur Einstellung einer solchen Vorrichtung zum Gewichtsausgleich ist es beispielsweise bekannt, das dynamische und statische Verhalten der durch die Robotermechanik sowie den Roboterantrieb festgelegten Regelstrecke mathematisch anhand von Bewegungsgleichungen für den gesamten Roboter zu modellieren. In die erhaltenen Bewegungsgleichungen lassen sich die Gleichgewichtsbedingungen in Abhängigkeit der Position des Roboterarms für jede Koordinatenachse einsetzen. Löst man dieses Gleichungssystem nach den Antriebsmomenten auf, so erhält man den zeitlichen Sollverlauf von Geschwindigkeit und Antriebsmomenten für vorgegebene Bewegungen des Roboterarms. Der auf diese Weise erhaltene Sollwert kann in der Regelegung zur Vorsteuerung verwendet werden. Während im Idealfall - bei exakter mathematischer Modellierung der realen Bewegungsverhältnisse des Roboters - keine Regelabweichung aufträte, ist in der Praxis ein Regler unabdingbar, um die Fehler des Modells auszugleichen. Hierzu muss der beispielsweise als PID-Regler ausgebildete Regler mittels eines Stellgliedes mit den tatsächlichen Bewegungsverhältnissen des Roboters beaufschlagt werden, so dass der Regler in der Lage ist, die Differenzen nachzuregeln. Auf diese Weise kann der Roboterarm zu jedem Zeitpunkt mit maximal möglicher Geschwindigkeit bzw. mit maximal möglicher. Beschleunigung betätigt werden, ohne die zulässigen Grenzwerte zu überschreiten.

Es sind z.B. Gasfedern bekannt, die beispielsweise so an einem Roboterarm befestigt sind, dass sie bei Auslenkung des Roboterarms komprimiert bzw. gestreckt werden und somit den von der Auslenkung des Roboterarms abhängigen Druck in eine von dieser Auslenkung abhängige Kraft umsetzen. Nachteilig bei der Verwendung solcher Gasfedern ist insbesondere die Tatsache, dass die Beziehung zwischen Auslenkung und Kraft einer Gasfeder nur dann proportional ist, solange das Verhalten des Gases mit der idealen Gasgleichung angenähert werden kann. Da sich insbesondere bei höheren Gasdrücken das Gas nicht mehr ideal verhält und sich bei der Kompression erwärmt bzw. bei der Depression abgekühlt, weist die mittels Gasfedern erzeugt Kraft eine erhebliche Schwankungsbreite auf, was einerseits zu einer schwankenden Lastkompensation aufgrund von Temperaturänderungen und andererseits zu einer mangelhaften Ausnutzung der Antriebsressourcen führt, da die Leistungsgrenzwerte des Roboters sich aus Sicherheitsgründen an den ungünstigen Werten orientieren müssen. Ferner werden durch Leckagen der Gasfedern verursachte Druckabfälle nicht erkannt, was zu Überlastung und Schädigung des Roboters führen kann.

Die JP 6-262 561 betriff einen Gewichtsausgleich und ein Verfahren zur Erzielung eines solchem mit einem gesteuerten Pneumatikzylinder, dessen Druckwert nicht konstant bleiben soll, sondern je nach Stellung des Roboters an die Stellung in unterschiedlicher Weise verändert und angepasst werden soll. Dem gemäss ist ein Regelmechanismus vorgesehen, in den mittels eines Pneumatikzylinders gemessen, mit einem aus einem Speicher entnommenen vorgegebenen Soll-Wert verglichen und entsprechend eine Druckänderung im Pneumatikzylinder vorgenommen wird. Auch die US 4 229 136 zeigt einen aktiven Pneumatikzylinder, dessen Beaufschlagung an vorgegebene Soll-Werte angepasst wird, die augrund von gespeicherten Gewichten bekannter Werkzeuge und Gegenstände bestimmt sind. Keine der Druckschriften nutzt die Messdaten eines fluiddruckmessenden Sensors zur Beeinflussung der Bewegung des Roboters selbst über dessen Steuerung und die von dieser gesteuerten Antriebe.

Der Erfindung liegt die Aufgabe zugrunde, unter Vermeidung der vorgenannten Nachteile eine Vorrichtung und ein Verfahren zum Gewichtsausgleich eines Roboterarms eines Roboters der eingangs genannten Art vorzuschlagen.

Die Aufgabe wird erfindungsgemäß durch eine Vorrichtung gemäss Anspruch 1 und ein Verfahren gemäss Anspruch 8 gelöst.

Durch die Messung des Druckes des in der Gasfeder eingeschlossenen Gases erhält man einen für den momentanen Bewegungszustand des Roboters repräsentativen Wert. Die hohe Zuverlässigkeit und Exaktheit eines derartigen Drucksensors hat zur Folge, dass der Roboter praktisch bis zu seinen Leistungsgrenzwerten angetrieben werden kann und somit mit der größten Effizienz arbeitet. Ein weiterer Vorteil ist das Erkennen von Leckagen in der Fluidfeder durch einen Druckabfall.

In bevorzugter Ausführung ist der erfindungsgemäße Drucksensor mit einem oder mehreren Grenzwertgebern zur Erzeugung von Signalen bei erreichten vorgebbaren Druckgrenzwerten verbunden. Dieser Grenzwertgeber wiederum ist bevorzugt mit einer Schutzeinrichtung zur automatischen Abschaltung des Roboterantriebs bei Über- und/oder Unterschreiten eines vorgebbaren Druckgrenzwertes verbunden. Auf diese Weise wird eine Überlastung oder Schädigung des Roboters zuverlässig vermieden, indem bei einem sehr hohen Druck, beispielsweise in unzulässigen Extremstellungen des Roboterarms oder zu hoher Temperatur, oder bei sehr niedrigem Druck, z. B. bei einem Leck in der Gasfeder, der Roboterantrieb automatisch abgeschaltet wird.

In weiterhin bevorzugter Ausführung weist die Vorrichtung zum Gewichtsausgleich eines Roboterarms eine Überwachungseinrichtung zur Überwachung des durch den Drucksensor gemessenen Drucks der Fluidfeder auf, die vorzugsweise zur Überwachung des zeitlichen Druckverlaufes der Fluidfeder zur Ermöglichung einer pädiktiven Diagnose ausgebildet ist. Insbesondere ist vorgesehen, daß die Überwachungseinrichtung zur Überwachung des gemessenen Drucks sowie des zeitlichen Druckverlaufes der Fluidfeder in Abhängigkeit von Stellungen des Roboterarms ausgebildet ist. Eine derartige Überwachungseinrichtung, die die Druckverhältnisse in jeder Bewegungsphase des Roboterarms überwacht, ermöglicht eine Anpassung der Bewegungsdaten mittels Nachregelung und eine optimalen Ausnutzung der Antriebsressourcen. Ferner werden schleichende Veränderungen des Drucks und Anomalien des Druckverlaufes erkannt und somit beispielsweise Hinweise auf eine fällige Wartung des Roboters erhalten.

Der Fluiddruck wird vorzugsweise auf Erreichen vorgegebener Grenzwerte überwacht und der Roboterantrieb bei Über- und/oder Unterschreiten eines vorgebbaren Druckgrenzwertes abgeschaltet, um eine Überlastung und Schädigung des Roboters zu vermeiden.

In weiterhin bevorzugter Ausführung ist vorgesehen, daß der gemessene Druck und insbesondere der zeitliche Druckverlauf der Fluidfeder überwacht wird und sowohl der gemessene Druck als auch der zeitliche Druckverlauf der Fluidfeder in Abhängigkeit von den Stellungen des Roboterarms überwacht werden.

In einer Steuereinrichtung eines Roboters wird dessen statisches und dynamisches Verhalten im Rahmen eines Robotermodells mathematisch in einem Gleichungssystem nachgebildet. Dies erlaubt aus den Momenten am Antrieb (Motor) das Moment am einzelnen Abtrieb mit allen Einflüssen (Gravitation, Reibung, Trägheit, Zentrifugalkräfte, Abstütztkräfte etc.) zu berechnen, aus der Achsstellung, Achsgeschwindigkeit und Achsbeschleunigung das für diese aktuelle Fahrsituation erforderliche Antriebsmoment (Motor) zu berechnen (Momentenvorsteuerung) und aus der Achsstellung und den gegebenen maximal zur Verfügung stehenden Motor- und Getriebemomenten die maximal zulässige Beschleunigung aller Achsen zu bestimmen.

Berücksichtigt werden dabei u.a. Masse, Schwerpunkt der Trägheiten der Robotermechanikkomponenten, Masse, Schwerpunkt und Trägheiten der angebauten Last (Werkzeug, Nutzlast), Motormomente, Getriebemomente, Reibmomente, Gravitations-, Coriolis-, Zentrifugal- und Abstützmomente und Achsposition, Achsgeschwindigkeit und Achsbeschleunigung.

Unter Verwendung der o.g. Eingangswerte berechnet das Modell die aktuell erforderlichen Motormomente und liefert diese im Sinne einer Momentenvorsteuerung an die Antriebsregelung. Dieses Verfahren entlastet die Antriebsregelung und verbessert damit die statische und dynamische Genauigkeit des Roboters. Im Idealfall entsprächen die berechneten Momente den realen Momenten und die Antriebsregler wären arbeitslos. In der Praxis haben die Antriebsregler nur die Fehlbeträge auszugleichen, die durch die Unvollkommenheit des Modells oder die Ungenauigkeit der Vorgaben bedingt sind.

Neben der Momentenvorsteuerung liefert das Modell auch Informationen an das Modul Bahnplanung/Fahrprofilgenerierung. Dieses Modul sorgt dafür, daß die Beschleunigungs- und Bremsrampen stets so eingestellt werden, daß die meistbeanspruchte Achse mit den zulässigen Maximalwerten fährt. Dies ermöglicht maximale Fahrdynamik bei gleichzeitiger Einhaltung der Grenzwerte.

Bisher wird die Unterstützungskraft des Gewichtsausgleichs prinzipiell berücksichtigt, indem die Federkraft des Zylinders in Abhängigkeit von der Achsstellung berechnet wird. Diese Berechnung erfolgt mit vorgegebenen Konstanten und kann damit die Abweichungen im praktischen Betrieb nicht berücksichtigen. Diese Abweichungen entstehen durch Leckage, Temperatur und/oder zeitlicher Druckverlauf infolge adiabatischen Prozesses.

Diese Ungenauigkeiten führen zu einer erhöhten Beanspruchung der Regelung, andererseits werden Fehlerzustände (falsche Druckeinstellung, falsche Parametervorgabe für das Modell, starker Druckverlust, sonstige Schäden und Fehlfunktionen des Zylinders) nicht oder erst bei extremen Ausprägungen erkannt.

Zur Vermeidung dieser Nachteile ist der erfindungsgemäße Drucksensor daher mit der Steuereinrichtung des Roboters zur Anpasung der Bewegungsdaten des gemessenen Drucks der Fluidfeder an Parameter der Bewegungssteuerung verbunden, so daß eine Verbesserung der Vorsteuerung der Bewegungsdaten eines solchen Roboters erfolgt und damit die eigentliche Regelung entlastet wird.

Verfahrensrichtig werden die Parameter der Bewegungssteuerung des Roboterarms an den gemessenen Druck der Fluidfeder angepaßt, so daß die Bewegungsdaten automatisch nachgeregelt werden können.

Durch diese erfindungsgemäßen Maßnahmen wird zunächst in vorteilhafter Weise eine Entlastung der Regelung durch Wegfall von Ungenauigkeiten beim berechneten Druckwert erreicht. Darüber hinaus können Sicherheitszuschläge oder -abschläge entfallen, wodurch sich die Fahrdynamik verbessert und die Leistungsgrenze des Roboters können ausgefahren werden Weiterhin werden Abnormitäten sicher erkannt durch Vergleich des gemessenen Wertes mit dem berechneten Wert. Auch eignet sich die Möglichkeit der Aufzeichnung von Druckwerten in ausgewählten Situationen in einem Log-File zu Diagnose- und Wartungszwecken.

Durch diese erfindungsgemäße adaptive Verwendung der Druckmessung in der Robotersteuerung ist es nicht notwendig, eine aufwendige und kostenträchtige Druckregelung vorzusehen. Die Druckfeder kann als rein passive, ungeregelte ausgebildet sein.

Weitere Vorteile und Merkmale der Erfindung ergeben sich aus den Ansprüchen aus der nachfolgenden Beschreibung, in der ein Ausführungsbeispiel der Erfindung unter Bezugnahme auf die Zeichnungen im einzelnen erläutert ist. Dabei zeigt:
- Fig. 1: eine schematische Darstellung der mechanischen Ausgestaltung einer erfindungsgemäßen Vorrichtung zum Gewichtsausgleich eines Roboterarmes;
- Fig. 2: ein Blockschaltbild zur adaptiven Einbindung des erfindungsgemäß gemessenen Drucks der Fluidfeder in die Steuerung eines Roboters;
- Fig. 3: eine genauere und spezifischere schematische Darstellung zum Einfluß der Fluiddruckmessung bei der Steuerung des Roboters.

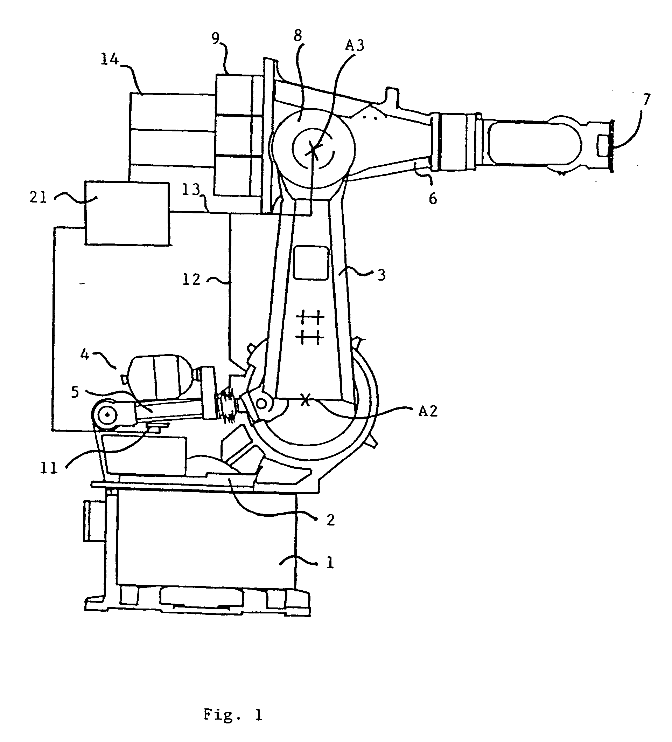

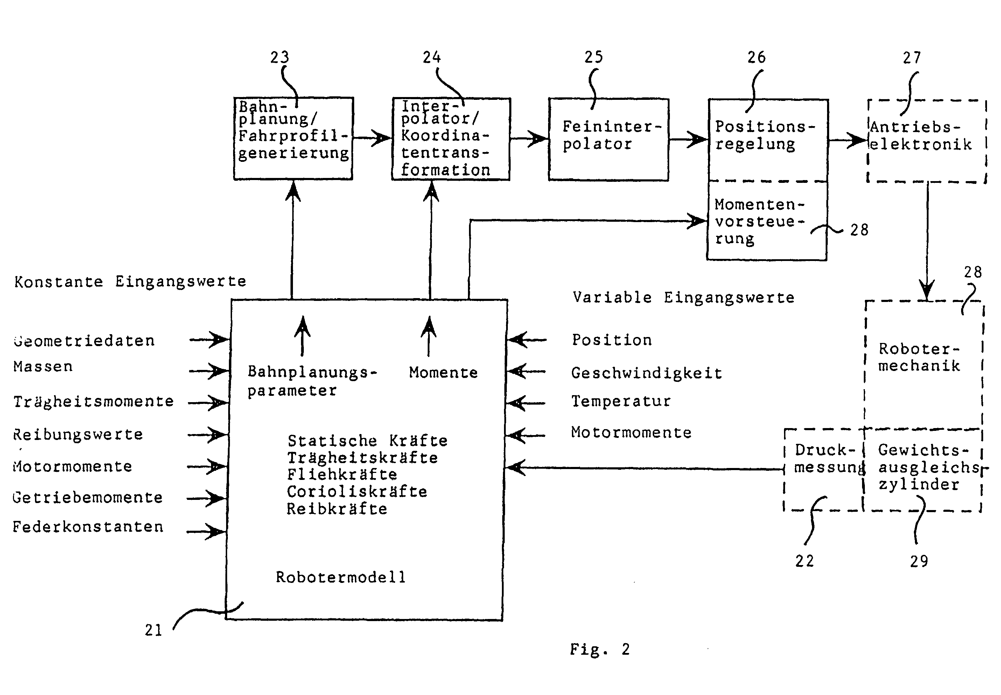

Die Fig. 1 stellt schematisch einen Roboter in Seitenansicht dar. Er weist einen Sockel 1 auf, auf dem ein Drehkranz 2 angeordnet ist, über den der Roboter mittels eines ersten nicht dargestellten Motors um seine vertikale A1-Achse drehbar ist. Am Drehteller 2 ist um die A2-Achse eine Schwinge 3 verschwenkbar angeordnet, der ein Gewichtsausgleich 4 einer Fluidfeder 5 zugeordnet ist. Um Gewichtsbelastungen insbesondere des Arms 6, der an dessen Vorderseite 7 angeordneten Werkzeuge sowie gegebenenfalls auch dort getragene Lasten zu kompensieren. Der Arm 6 ist an der Schwinge 3 um die A3-Achse schwenkbar angelenkt. Die Schwinge 3 ist um die A2-Achse durch einen ebenfalls nicht dargestellten Motor (gegenüber der Ansichtsseite auf der Rückseite des Roboters) und der Arm 6 um die A3-Achse durch einen Motor 8 verschwenkbar. Der Arm 6 weist an seiner der Vorderseite 7 abgewandten Rückseite drei Motoren 9 zur Betätigung eines an der Vorderseite 7 anzubringenden Werkzeugs auf. Hierzu erstrecken sich Antriebswellen durch den Arm 6. An der Fluidfeder 5 befindet sich ein Sensor, der mit 11 schematisch dargestellt ist und seine Signale zu einer Steuerung 21 überträgt. Weitere zu dieser führende Signalleitungen sind in der Fig. 1 nicht näher dargestellt (aber der Fig. 2 entnehmbar). Die Steuerung 21 weist Steuerleitungen zu den verschiedenen Motoren auf, wobei Steuerleitungen 12 zum nicht dargestellten Motor zum Antrieb der Schwinge 3 um die A2-Achse, 13 zum Motor 8 und 14 zu den Motoren 9 in der Fig. 1 angedeutet sind.

Die Robotersteuerung ist mit 21 bezeichnet. Der Steuervorgang erfolgt aufgrund einer Reihe von konstanten Eingangswerten und variablen Eingangswerten. Konstante Eingangswerte sind beispielsweise Geometriedaten, Massen, Trägheitsmomente, Reibungswerte, Motormomente, Getriebemomente, Federkonstanten und gegenbenenfalls weitere. Variable Eingangswerte sind insbesondere die Position oder die Stellung der einzelnen relativ zueinander beweglichen Roboterkomponenten (Arme), deren Geschwindigkeit, Temperaturen und Motormomente. Die variablen Eingangswerte werden durch geeignete Meßeinrichtungen, insbesondere Sensoren und Resolver (letztere insbesondere zur Positions- und Geschwindigkeitsbestimmung) am Roboter erfaßt und der Robotersteuerung 21 zugeführt.

Erfindungsgemäß ist nun vorgsehen, daß der durch einen Drucksensor 22 gemessene Druckwert der Fluidfeder ebenfalls-als tatsächlicher realer variabler Eingangswert der Steuerung zugeführt und in das mathematische Robotermodell zur Berechnung der Bewegung des Roboters eingeht. Aufgrund der derart durch die Steuerung 21 aufgenommenen Eingangsdaten, nämlich konstanten und variablen Eingangswerten erfolgt der Steuerungsvorgang des Roboters über eine Bahnplanung und Farbprofilgenerierung 23, eine Interpolation sowie Koordinatentransformation 24 und eine nachfolgende Feininterpolation des Bewegungsvorganges 25. Aufgrund der so gewonnenen Steuerdaten erfolgt eine Positionsregelung 26 der Antriebselektronik 27 wobei gleichzeitig von der Steuerung 21 her eine Momentenvorsteuerung 28 vorgenommen wird. Die Antriebselektronik 27 steuert derart die Bewegung der Robotermechanik 28, wodurch, bei einer erfolgenden Bewegung, eine Druckveränderung im Fluid- oder Gewichtsausgleichzylinder 29 erfolgt, die wiederum durch den Drucksensor 22 gemessen, der Robotersteuerung 21 übergeben und bei der weiteren Steuerungsbewegung des Roboters berücksichtigt wird.

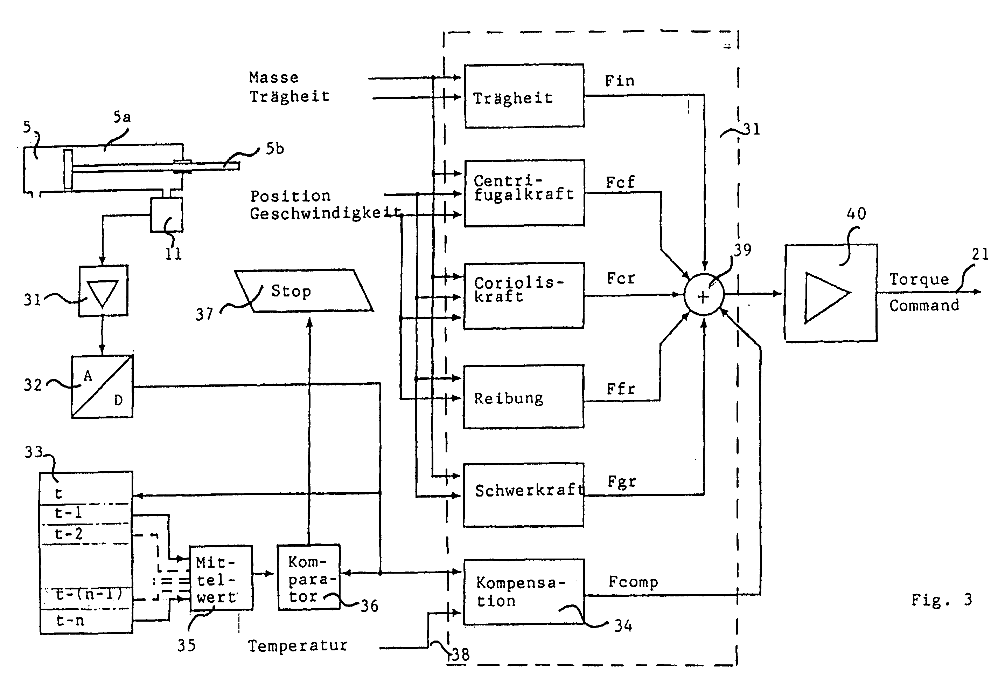

Die Fig. 3 nimmt die konstruktiv mechanische Ausbildung der Fig. 1 sowie der Steuerung der Fig. 2 nun spezifischer wieder auf. Sie zeigt eine Fluidfeder 5 mit einem fest dem Drehteller 2 verbundenen Zylinder 5a und einem mit der Schwinge 3 verbundenen Kolben 5b. Es ist weiterhin der Drucksensor 11 vorhanden, der über einen Verstärker 31 und einem Analog/Digital-Wandler 32 mit einerseits mit einem Speicher 33 und andererseits mit einer Kompensationseinheit 34 innerhalb der Steuerung 21 verbunden ist.

Im Speicher 33 werden die zeitlich aufeinandererfolgenden Druckwerte gespeichert und aus ihnen in einer Einheit zur Mittelwertbildung 35 der Mittelwert der gemessenen und im Speicher 33 gespeicherten Druckwerte berechnet. Dieser Mittelwert wird einer Vergleichseinheit 36 zugeführt, die den Mittelwert mit dem aktuell durch den Drucksensor 11 gemessenen Druckwert vergleicht. Ergibt der Vergleich eine Abweichung über eine vorgegebenen Differenz hinaus, insbesondere also einen sehr hohen Druckabfall, so erfolgt ein Stopkommando 37, da ein Fehler vorliegt.

In der Kompensationseinheit 34 wird der gemessene Druckwert über eine Temperaturmessung 38 temperaturbereinigt und geht in die Bewegungsrechnung im Rechner 39 der Steuerungseinrichtung 21 zusammen mit anderen vorgegebenen oder gemessenen Werten wie Trägheit, Zentrifugal-, Coriolis- und Reibungskräften sowie Schwerkraft ein. Hieraus ergibt sich dann über eine Verstärker 40 das Steuerungssignal an dem Ausgang 41.

## Patentansprüche

1. Vorrichtung zum Gewichtsausgleich eines Roboterarms (6) eines Roboters, mit einer Fluidfeder (5), insbesondere einer Gasfeder, mit einer Steuereinrichtung (21) zur Steuerung der Bewegung des Roboters, mit einem den Druck des Fluids der Fluidfeder messenden Drucksensor (11, 22), **gekennzeichnet durch** eine Signalleitung vom Drucksensor zur Steuereinrichtung (21) zum Eingang der Messdaten des Drucksensors (11, 22) in die Steuerung der Bewegung des Roboters.

2. Vorrichtung nach Anspruch 1, **gekennzeichnet durch** mit dem Durcksensor (11, 22) verbundene Grenzwertgeber zur Erzeugung von Signalen bei erreichten vorgebbaren Druckgrenzwerten.

3. Vorrichtung nach Anspruch 2, **dadurch gekennzeichnet, daß** der Grenzwertgeber mit einer Schutzeinrichtung (36, 37) zur automatischen Abschaltung eines Roboterantriebs bei Über- und/oder Unterschreiten eines vorgebbaren Druckgrenzwertes verbunden ist.

4. Vorrichtung nach Anspruch 1, **gekennzeichnet durch** eine Überwachungseinrichtung (33, 35) zur Überwachung des **durch** den Drucksensor gemessenen Drucks der Fluidfeder.

5. Vorrichtung nach Anspruch 4, **dadurch gekennzeichnet, daß** die Überwachungseinrichtung (33, 35) zur Überwachung des zeitlichen Druckverlaufs der Fluidfeder durch Diagnose ausgebildet ist.

6. Vorrichtung nach Anspruch 5, **dadurch gekennzeichnet, daß** die Überwachungseinrichtung (33, 35) zur Überwachung des gemessenen Drucks sowie des zeitlich Druckverlaufs der Fluidfeder in Abhängigkeit von Stellungen des Roboterarms ausgebildet ist.

7. Vorrichtung nach Anspruch 1, **dadurch gekennzeichnet, daß** die Steuereinrichtung des Roboters die Bewegungsdaten des Roboterarms aufgrund des gemessenen Drucks der Fluidfeder anpaßt.

8. Verfahren zum Gewichtsausgleich eines Roboterarms (6) eines Roboters, wobei die Gewichtskompensation des Roboterarms durch eine Fluidfeder (5), insbesondere eine Gasfeder, bewirkt wird und die Bewegungen des Roboters gesteuert werden, wobei weiterhin der Druck des Fluids in der Fluidfeder gemessen wird, **dadurch gekennzeichnet, daß** der gemessene Druckwert der Fluidfeder als Eingangswert der Steuerung (21) zugeführt wird und in die Steuerung der Bewegungen des Roboters eingeht.

9. Verfahren nach Anspruch 8, **dadurch gekennzeichnet, daß** der Fluiddruck auf Erreichen vorgebbarer Grenzwerte überwacht wird.

10. Verfahren nach Anspruch 9, **dadurch gekennzeichnet, daß** der Roboterantrieb bei Über- und/oder Unterschreiten eines vorgebbaren Druckgrenzwertes abgeschaltet wird.

11. Verfahren nach Anspruch 8, **dadurch gekennzeichnet, daß** der gemessene Druck der Fluidfeder überwacht wird.

12. Verfahren nach Anspruch 11, **dadurch gekennzeichnet, daß** der zeitliche Druckverlauf der Fluidfeder überwacht wird.

13. Verfahren nach Anspruch 12, **dadurch gekennzeichnet, daß** der gemessene Druck sowie der zeitliche Druckverlauf der Fluidfeder in Abhängigkeit von Stellungen des Roboterarms überwacht wird.

14. Verfahren nach Anspruch 8, **dadurch gekennzeichnet, daß** die Parameter der Bewegungssteuerung des Roboterarms an den gemessenen Druck der Fluidfeder angepaßt werden.

## Claims

1. Device for the weight balancing of a robot arm (6), having a fluid spring (5), particularly a gas spring, a control device (21) for controlling the robot movement, a pressure sensor (11, 22) measuring the pressure of the fluid spring fluid, **characterized by** a signal line from the pressure sensor to the control device (21) for inputting measured data of the pressure sensor (11, 22) into the robot movement control.

2. Device according to claim 1, **characterized by** a limit indicator connected to the pressure sensor (11, 22) for generating signals on reaching preset pressure limits.

3. Device according to claim 2, **characterized in that** the limit indicator is connected to a protective device (36, 37) for the automatic disconnection of a robot drive on passing above and/or below a preset pressure limit.

4. Device according to claim 1, **characterized by** a monitoring device (33, 35) for monitoring the fluid spring pressure measured by the pressure sensor.

5. Device according to claim 4, **characterized in that** the monitoring device (33, 35) is constructed for monitoring the time pressure pattern of the fluid spring by diagnosis.

6. Device according to claim 5, **characterized in that** the monitoring device (33, 35) is constructed for monitoring the measured pressure and the time pressure pattern of the fluid spring as a function of robot arm positions.

7. Device according to claim 1, **characterized in that** the robot control device adapts the motion data of the robot arm on the basis of the measured fluid spring pressure.

8. Method for the weight balancing of a robot arm (6), the weight compensation of the robot arm being brought about by a fluid spring (5), particularly a gas spring and the movements of the robot are controlled, the fluid pressure in the fluid spring is measured, **characterized in that** the measured pressure value of the fluid spring is supplied as an input value to the control (21) and passes into the robot movement control.

9. Method according to claim 8, **characterized in that** the fluid pressure is monitored for reaching preset limits.

10. Method according to claim 9, **characterized in that** the robot drive is disconnected on passing above and/or below a preset pressure limit.

11. Method according to claim 8, **characterized in that** the measured fluid spring pressure is monitored.

12. Method according to claim 11, **characterized in that** the time pressure pattern of the fluid spring is monitored.

13. Method according to claim 12, **characterized in that** the measured pressure and the time pressure pattern of the fluid spring are monitored as a function of robot arm positions.

14. Method according to claim 8, **characterized in that** the parameters of the motion control of the robot arm are adapted to the measured fluid spring pressure.

## Revendications

1. Dispositif d'équilibrage pondéral d'un bras (6) d'un robot, comprenant un ressort à fluide (5) en particulier un ressort à gaz, un dispositif de commande (21) pour commander le mouvement du robot, un capteur de pression (11, 22) mesurant la pression du fluide du ressort à fluide, **caractérisé par** un circuit de fourniture des signaux du capteur de pression au dispositif de commande (21) pour l'entrée des données de mesure du capteur de pression (11, 22) dans la commande du mouvement du robot.

2. Dispositif selon la revendication 1, **caractérisé par** des indicateurs de valeurs limites reliées au capteur de pression (11, 22) pour la génération de signaux lorsque des valeurs de pression limite pouvant être prédéfinies sont atteintes.

3. Dispositif selon la revendication 2, **caractérisé en ce que** l'indicateur de valeur limite est relié à un dispositif de protection (36, 37) pour l'arrêt automatique d'une commande de robot lorsqu'une valeur limite de pression prédéfinie est dépassée vers le haut et/ou vers le bas.

4. Dispositif selon la revendication 1, **caractérisé par** un dispositif de contrôle (33, 35) pour contrôler la pression du ressort à fluide mesurée par le capteur de pression.

5. Dispositif selon la revendication 4, **caractérisé en ce que** le dispositif le contrôle (33, 35) pour contrôler l'excursion dans le temps de la pression du ressort à fluide présente un diagnostic.

6. Dispositif selon la revendication 5, **caractérisé en ce que** le dispositif de contrôle (33, 35) pour contrôler la pression mesurée ainsi que l'allure dans le temps de la pression du ressort à fluide est fonction de position du bras de robot.

7. Dispositif selon la revendication 1, **caractérisé en ce que** le dispositif de commande du robot adapte les données cinétiques du bras de robot sur la base de la pression mesurée du ressort à fluide.

8. Procédé d'équilibrage pondéral d'un bras (6) d'un robot, dans lequel la compensation pondérale du bras de robot est effectuée par un ressort à fluide (5), en particulier un ressort à gaz et dans lequel les mouvements du robot sont commandés, et dans lequel en plus, la pression du fluide est mesurée dans le ressort à fluide, **caractérisé en ce que** la valeur de pression mesurée du ressort à fluide est fournie à la commande (21) comme valeur d'entrée et entre dans la commande des mouvements du robot.

9. Procédé selon la revendication 8, **caractérisé en ce que** la pression du fluide est contrôlée par rapport à son arrivée à des valeurs limites prédéfinies.

10. Procédé selon la revendication 9, **caractérisé en ce que** la commande de robot est arrêtée lors du dépassement vers le haut et/ou vers le bas d'une valeur limite de pression prédéfinie.

11. Procédé selon la revendication 8, **caractérisé en ce que** l'on contrôle la pression mesurée du ressort à fluide.

12. Procédé selon la revendication 11, **caractérisé en ce que** l'on contrôle l'excursion dans le temps de la pression du ressort à fluide.

13. Procédé selon la revendication 12, **caractérisé en ce que** l'on contrôle la pression mesurée ainsi que l'excursion dans le temps de la pression du ressort à fluide en fonction de position du bras de robot.

14. Procédé selon la revendication 8, **caractérisé en ce que** les paramètres de la commande de mouvement du bras de robot sont adaptés à la pression mesurée du ressort à fluide.
